Europäisches Patentamt

European Patent Office

Office européen des brevets

(19)

(11) EP 0 969 281 A2

(12) **EUROPEAN PATENT APPLICATION**

(43) Date of publication:
05.01.2000 Bulletin 2000/01

(51) Int Cl.$^7$: **G01N 27/30**

(21) Application number: 99650054.2

(22) Date of filing: 30.06.1999

(84) Designated Contracting States:
**AT BE CH CY DE DK ES FI FR GB GR IE IT LI LU
MC NL PT SE**
Designated Extension States:
**AL LT LV MK RO SI**

(30) Priority: **30.06.1998 IE 980529**

(71) Applicant: **University College Cork-National
University of Ireland, Cork
Cork (IE)**

(72) Inventors:
• **Lane, William
  Waterfall, Co. Cork (IE)**
• **Newton, Hazel Victoria
  Cork (IE)**
• **Hill, Martin Jude Mary
  Douglas, Co. Cork (IE)**

(74) Representative:
**Gates, Marie Christina Esther et al
c/o Tomkins & Co.
5 Dartmouth Road
Dublin 6 (IE)**

(54) **The use of screen-printed electrodes in the electrochemical analysis of electroactive species**

(57) A method of electrochemical analysis is described which utilises an electrode cell (12) incorporating one or more electrode strips (1). The strip comprises a working electrode (2) which is screen printed with a non-mercury based metal ink and does not require any overlying layer to perform an analysis of an analyte/electrolyte mixture (11) contained within the cell (12). This electrochemical cell is used in a technique known as electrochemical stripping analysis which utilises the variation of an applied voltage at an electrode and the measurement of the resultant current. The technique is used for the analysis of electroactive species such as lead, copper, zinc, magnesium and bismuth.

FIG. 2

**Description**

Technical Field

This invention relates to a method of electrochemical analysis of electroactive species within liquids, and also to an electrode or electrode strip and an electrode cell for use in performance of the method. The invention particularly relates to the use of screen-printed, non-mercury-based electrodes, preferably gold, for the in-field analysis of trace metals, including, in one case, the use of an integral component of the non-mercury-based electrode as an accurate calibration scaling feature.

Background Art

The invention is based on an established technique known as electrochemical stripping analysis. Electrochemical measurement techniques such as potentiometry, chronoamperometry or voltammetry may be used in stripping analysis - here, voltammetry is used as an illustration. Voltammetry is a generic term for those techniques in which the applied potential at an electrode is varied and the resultant current is measured. When there is a high concentration of analyte in the solution to be measured, simple voltammetry is sufficient. For example, in the measurement of metal ions an electrode is made gradually more and more negative. At a certain potential (which is specific to the metal ion) reduction begins to occur and the resultant current can be related back to the concentration in the solution by means of a standard curve. In addition, the signal-to-noise ratio can be improved by applying a waveform to the applied potential, such as a differential pulse or a square wave.

For lower concentrations of analyte the currents obtained from simple voltammetry are not large enough for accurate measurement so it is necessary to preconcentrate the analyte at the electrode surface. Several pre-concentration methods are used, such as simple adsorption, electrochemical reduction and complexation by chelating agents attached to the electrode surface. The voltammetric measurement process then results in the removal of the analyte from the surface, leading to the term stripping voltammetry.

Screen printed, thick-film inks are commonly used to prepare electrodes for commercially available electrochemical sensors. For example, screen-printed carbon is used in conjunction with glucose oxidise to measure glucose in blood by amperometry [A.E.G. Cass et al., Anal. Chem., 56, 1984, 667]. Other components using the same technology, such as reference electrode and encapsulant, are combined to produce low cost, robust, disposable electrode strips with good uniformity.

Anodic stripping voltammetry (ASV) is another analytical technique which has moved out of the laboratory with the aid of screen-printed electrodes. Based on the hanging mercury drop electrode system developed by Heyrovsky in the 1920's, metal ions are first pre-concentrated by reduction at the negatively-held electrode. Stripping then occurs when the electrode potential is swept in the positive direction and the metals are re-oxidised at characteristic potentials, with the associated current being proportional to the initial concentration in solution. To improve the sensitivity of the technique a differential pulse waveform is often used in the stripping step (DPASV). The technique has been rendered field-portable by the *in-situ* formation of a mercury film on a screen printed carbon electrode [J. Wang and B. Tian, Anal. Chem, 64, 1992, 1706-1709: D. Desmond *et al.*, Sensors and Actuators B, 34, 1996, 466-470] as in the SA-1000 Scanning Analyser System for Environmental Analysis, (Palintest, Gateshead, UK).

US 5292423 describes a method and apparatus, for the measurement of trace levels of heavy metals using screen printed multiple electrodes on a substrate, that requires three steps;

    1. formation of an active electrode surface on a screen-printed carbon substrate
    2. electrochemical pre-concentration
    3. measurement by voltammetry.

The screen-printed carbon electrodes used are not sufficiently active to reduce the metal ions to be measured, therefore, an initial step is required in which mercury salts in solution, or isolated close to the electrode surface, are reduced to form a layer of mercury on the surface of the carbon electrodes. It is this mercury layer (in the form of microdroplets) which acts as the electrode in the subsequent stripping voltammetry.

The use of mercury has an historical basis, since mercury was found to be the best electrode material (in the form of a hanging drop) in laboratory-based measurements. (N.B. In the specific case of voltammetry at a mercury electrode, the term polarography is used. ) However, the toxicity of mercury and increasingly stringent legislative controls, particularly proposals by some countries to ban the accreditation of any system which uses mercury, requires the development of an alternative electrode system.

Gold is a highly active metal, with a broad potential window and less significant hydrogen adsorption peaks than other noble metals, which has been successfully used for the electrochemical measurement of trace metals [J.

Wang et al., Anal. Chem., 67, 1995, 1481-1485]. Screen printable gold is used as decoration in pottery manufacture, but the main use is in the electronics industry where the screen-printed gold is widely used for printing conducting tracks, for example on printed circuit boards, and inks are available from a number of manufacturers, including DuPont, Heraeus, Englehard, Emca-Remex, Ercon and Electro-Science Laboratories (ESL). These inks generally contain particulate gold with ceramic frit to provide bulk, metal oxide flux to promote adhesion, a matrix of organics and solvents to allow screen printing and sometimes copper to aid wire-bonding.

Polymeric gold inks have also been used in printed circuit boards. These use a polymeric matrix to bind particulate gold to a substrate. Whilst gold electrodes have been used in the prior art as components of sensor systems, additional layers have been required in order to provide analyte selectivity, e.g. gas sensitive layers, immobilised enzymes and redox mediators have all been used . In the present invention, the analyte is recognised directly at the electrode surface by the potential at which stripping occurs. As such no additional layers are required to the metal layer in order to identify or determine the components of the analyte.

Object of the Invention

It is thus an object of the present invention to provide a field-portable method and apparatus for the measurement of trace levels of electroactive species in liquids, in particular metal ions in aqueous solutions using screen-printed electrodes that do not utilise mercury. It is a further object that these electrodes can be used for the direct measurement of electroactive elements without overlying layers. It is a further object to integrate a working electrode with a reference electrode on a single substrate, which may additionally be used with a counter electrode, although the single susbtrate is not essential. These electrode strips are screen printed with high and low temperature inks comprising gold and/ or other metals. It is a further object of the present invention to utilise integral features of the electrodes to provide calibration scaling where necessary. It is yet a further object to provide cheap, efficient and reliable electrode strips and electrode cells for use in such a method and apparatus. A further object is to provide an electrode strip and electrode cell which are disposable.

Summary of the Invention

According to the invention there is provided an electrode strip for direct analysis of electroactive species comprising non-mercury-based metal ink, screen-printed onto a support. The metal ink is selected from: a polymeric ink comprising particulate gold, metal inks based on nickel, silver, palladium, platinum or copper, or alloys of the metals. Preferably, the electrode strip has no overlying or covering layer which participates in or enhances the analysis, and as such the electrode can detect analytes directly at the metal electrode surface. It will be apparent that the metal electrode can be coated with an inert substance that does not form part of the analysis required for identification of the analyte, in order to protect the metal surface

A sensor utilising this electrode does not require an additional transduction step such as enzyme activity or interaction with a gas sensitive layer.

The support is preferably an inert, non-conductive, physically robust material such as plastic (for low temperature inks) or ceramic.

In a second aspect the invention also provides an electrode cell comprising a working electrode comprising a screen-printed, non-mercury-based metal ink, a reference electrode, and optionally a counter or auxiliary electrode: the metal ink being selected from inks based on gold, nickel, silver, palladium, platinum or copper, or alloys of the metals.

The three electrodes may be formed on one electrode strip, or alternatively one or more electrodes may be printed on separate strips. For example, one electrode may be printed on one strip and two on an alternate strip, or all three electrodes may be printed on separate strips.

The counter or auxiliary electrode is preferably screen-printed with a non-mercury-based metal ink. In this case the metal ink may be defined above or it may be a high temperature gold ink comprising particulate gold metal.

The reference electrode is preferably a silver/silver chloride electrode, which may also optionally be screen-printed.

The high temperature gold ink may comprise particulate gold metal, a frit to form the physical bulk and to bind the gold to the surface, a solvent to improve the flow properties of the ink and a flux to promote binding and improve flow properties.

The flux is suitably a bismuth oxide or copper oxide flux, which acts to promote binding and to improve flow properties.

The polymeric ink may comprise particulate gold, a polymeric binder to hold the gold together and onto the substrate, and a solvent to make the ink screen-printable and fireable.

In a further aspect of the invention the ink may further comprise copper metal to assist in wire bonding. However, it is readily apparent that an ink containing copper metal is not suitable for use in a method of measuring copper concentration.

The invention also provides for the use of an electrode cell or an electrode strip as defined above for the for the measurement of electroactive species in liquids, for example analysis of copper concentration, or for the analysis of lead concentration. Responses to cadmium, zinc, mercury silver and bismuth have also been observed, and it will be appreciated to one skilled in the art that the invention can be extended to other non-metallic electroactive species such as cyanide.

In yet a further aspect of the invention a method of stripping voltammetry is provided in which the analyte response is scaled to an integral component of the high temperature ink. The method may comprise the steps of:-

i) connecting an electrode cell comprising an electrode strip which in turn comprises a non-mercury based metal ink, screen printed onto a support, to an instrument capable of the application of controlled waveforms and the measurement of the differential response to the applied waveform, the electrode cell comprising a working electrode, reference electrode and optionally a counter electrode

ii) adding an analyte to the electrode cell, and

iii) applying a controlled waveform to the analyte/electrolyte mix and measuring the analyte response to this waveform, further comprising the step of scaling the analyte response to an integral component of the working electrode.

This method may include the further step of adding an electrolyte to improve the conductivity and control the pH of the analyte.

In this case the metal ink may be as defined above or it may be a high temperature gold ink comprising particulate gold metal.

An apparatus for the determination of electroactive species in liquids is also provided comprising:

a) electrode strip or strips as defined above;

b) a volume definition;

c) electrolyte components;

d) an instrument capable of application of controlled waveforms and the measurement of the response to this applied waveform;

e) a visual read-out.

The response may be a differential response.

By volume definition is meant a container or containers suitable for confining a specific quantity of analyte, and wherein the electrode strip or strips may also be placed.

The apparatus preferably further comprises means for implementing a data conversion algorithm, that may be used to convert the differential response of the instrument to an estimation of the electroactive species concentration within the liquid.

Brief Description of the Drawings

The invention will be described and understood when read with reference to the accompanying drawings, in which:

Figure 1 is a schematic diagram of an electrode strip,

Figure 2 is a schematic diagram of a measurement system;

Figures 3 to 7 are voltammograms of various electrode strip types, in accordance with Table 1;

Figures 8 to 10 are calibration plots of peak current versus concentration for various strip types,

Figure 11 is a voltammogram showing the electrode response for silver,

Figure 12 is a voltammogram showing the electrode response for cadmium,

Figure 13 is a voltammogram of an electrode when the preconcentration potential is above the bismuth stripping potential, and

Figure 14 is a calibration plot of peak current versus concentration for the electrode of Figure 13.

Description of the Drawings

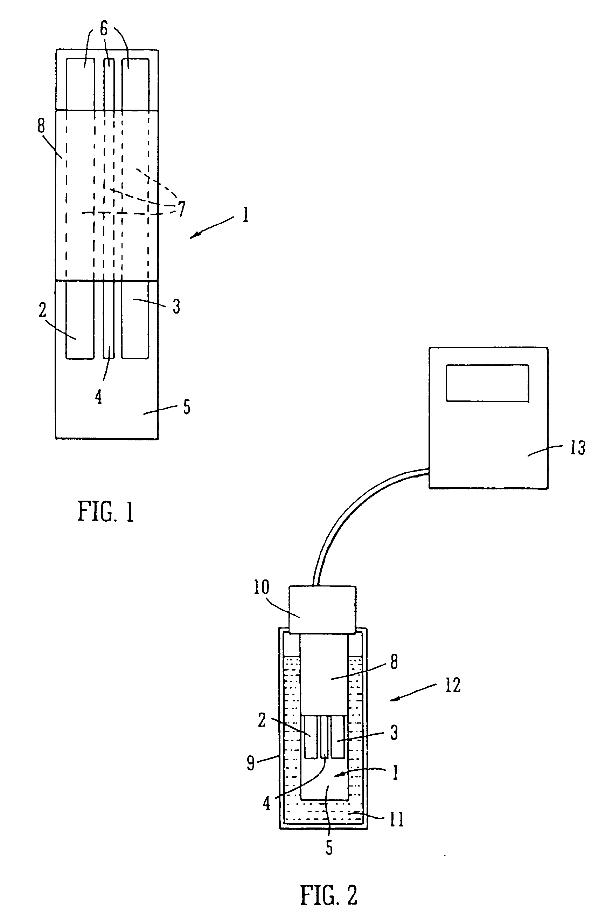

Figure 1 shows a screen printed electrode strip 1 according to the invention. It comprises a working electrode 2, a counter electrode 3 and a reference electrode 4. All three electrodes are printed on a ceramic substrate 5, each with contact pads 6 and connecting tracks 7. The connecting tracks are enclosed within an insulating encapsulant 8. As such the edge connectors and the defined electrode areas of the electrode strip, i.e. counter, working and reference electrodes, remain uncovered.

Figure 2 shows an electrode strip 1, placed within a container 9, which collectively is called an electrochemical cell 12. Contact to all three electrodes is made via custom built connector blocks 10. The container 9 is filled with an electrolyte/ analyte mixture 11. The electrolyte is necessary to improve the conductivity and to control the pH of the sample. The cell 12 is connected to a control unit 13.

The analyte contains the specific electroactive species to be measured. The term electroactive species refers to any species which may be oxidised or reduced at an electrode, under the conditions in the experimental cell used to measure it.

In use the present invention utilises a two step process for the measurement of trace levels of heavy metals. Electrochemical reduction is used as the pre-concentration method, with screen printed gold as the electrode material, manufactured as described above. Metal ions are reduced onto the surface of the electrode by holding it at a negative potential for a fixed time. The electrode potential is then swept in a positive direction, re-oxidising the metals back into solution. The potential at which this occurs specifies which metal analyte is being oxidised and the associated current can be related back to the original concentration in solution.

To facilitate the detection of an analyte in solution the three electrode cell must be used in conjunction with an instrument that can support the following modes of operation :

- the application of a controlled voltage waveform, as a function of time, between the working and reference electrodes and the measurement of current at the working electrode as a function of the voltage waveform,
- the application of a controlled current waveform, as a function of time, between the working and reference electrodes and the measurement of voltage at the working electrode as a function of the current waveform

The waveforms applied distinguish between the modes of measurement being carried out. In all analysis regimes the controlled parameter must be tightly controlled and all waveforms must have very precise time base control.

The instrument for a fully integrated electrochemical measurement system conducts all the control and measurement functions described above and also includes a user interface and analysis software.

In a preferred embodiment, the data analysis algorithm converts the sampled current values resulting from an electrochemical voltage sweep or the sampled voltage values from a controlled current experiment into a concentration measure for the target analyte. For the differential voltammetry measurements used to generate the calibration curves for copper and lead the current signal used as input to the algorithm is the difference between the current before the application of a voltage pulse and the current at the end of each current pulse. This is the standard measurement in differential pulse voltammetry.

The conversion algorithm has the following steps :

- Where the S/N ratio of the measured current is low, the data is smoothed using a finite impulse response filter to remove high frequency noise components.
- Where normalisation is required, the normalisation factor for the electrode under test is calculated from the measured data. This normalisation factor is used to scale all measured data for further processing and to identify electrodes which do not exhibit acceptable electrochemical response.
- An estimate of the baseline response (i.e. response in 0 ppb of target analyte) is subtracted from the measured data and an estimate is made of the initial peak current value.
- A non-linear fitting algorithm optimises the peak and baseline parameters using least squares minimisation.
- The optimum peak values output from the least squares fit is converted into a concentration reading using a standard curve measured in laboratory experiments from solutions of known concentrations.

Two preferred inks types are used for the manufacture of the working and counter electrodes, depending on the metal to be analysed. In one embodiment, the electrode is made using a high temperature frit based ink.

High temperature inks

Thick film gold inks were obtained from three leading suppliers as detailed in table 1.

Table 1.

| Gold inks and suppliers. | | |
|---|---|---|
| Supplier | Ink(s) | Strip identification. |
| DuPont Electronic Materials. NC, USA | 5715 Gold Conductor | A |

Table 1. (continued)

| Gold inks and suppliers. | | |
|---|---|---|
| Supplier | Ink(s) | Strip identification. |
| Ablestik, Cambridge, UK Emca-Remex products | 213U 850 gold | B |
| | 32-8638-106 850 over 9185 859 seed gold | C |
| Heraeus Incorporated, | C 5007 Cadmium-free, bondable gold | D |
| PA, USA | conductor paste | |
| | C 5020 paste for screen printing | E |

Electrodes (0.5 x 0.1 inches in size), with connecting tracks to contact pads, were screen-printed onto strips of ceramic (99.6 % alumina) and fired according to the following procedure,

1. A Ceramic substrate, e.g. using a raw material such as that manufactured by Coors, is scribed into 'electrode' pattern (which in this example is the forming of 21 electrodes per plate)

2. Two strips of gold ink are screen printed onto each electrode cell of the substrate. These strips will form the working electrode and the counter electrode.

3. The gold material is dried and subsequently fired onto the substrates in a kiln as per usual thick film procedures.

4. One strip of silver-silver chloride ink is screen printed and dried onto each electrode strip of the substrate to form the reference electrode.

5. An encapsulant layer is screen printed onto the electrode cell, so that only the edge connectors and defined electrode areas of the three electrode strips, i.e. counter, working, and reference, remain uncovered.

6. This encapsulant is subsequently cured in UV light.

7. After singulation of 21 electrodes from parent plate, an electrode strip is then connected to an instrument.

An electrode strip 1 was used, as shown in Figure 2, and the counter electrode 3 was an identical gold electrode printed on the same piece of ceramic 5. The central strip of commercially available screen printed electrodes (CBL, Enviromed Plc., Sandy, UK) was used as a silver/silver chloride reference electrode 4. Contact to all three electrodes was made via custom built connector blocks 10. A 50 ml polypropylene beaker 9, cleaned before each use by rinsing with concentrated HCl (BDH, Poole), was used as the electrochemical cell. A custom-made PTFE lid with slits held the electrodes in place. The electrolyte 11 used was 50 mM potassium hydrogen phthalate (buffer, pH 4) with 100 mM sodium chloride (both Aristar, BDH, Poole, UK) made up with high purity water. The electrolyte is necessary to improve the conductivity and to control the pH of the sample.

A lab based research potentiostat/galvanostat 13 (model 283, EG&G, Wokingham, UK) was used to perform differential pulse anodic stripping voltammetry. The stripping regime used in this case was deposition at - 900 mV for 60 seconds, followed by a stripping scan to + 800 mV with pulse width 3 ms, pulse height 45 mV, step height 5 mV and step time 150 ms. Some of the materials were analysed by electron dispersive X-ray spectroscopy (EDS) in order to identify their chemical constituents.

A copper calibration was performed on a single strip of material D. Aliquots of appropriate dilutions of a copper standard solution (1,000 ppm for ICP, Aristar, BDH, Poole, UK) were added to give cell concentrations ranging from 0.05 ppb to 8.88 ppm. The data was treated using commercially available data analysis software (Peakfit, Jandel Scientific, Erkrath, Germany). The copper peak was sectioned out to remove the influence of the interferent peaks and after baseline subtraction and Savitzky-Golay filtering, to remove noise, a non-linear curve-fit (based on the least squares method) was used to obtain current amplitudes.

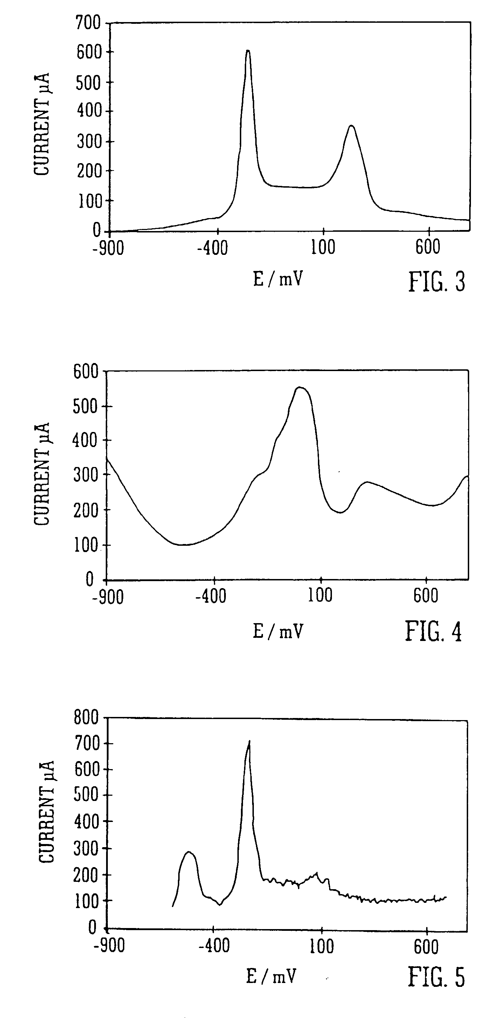

The voltammogram of strip A (Figure 3) showed two interference peaks and EDS indicated that the ink contained copper, cadmium and bismuth. Cadmium oxide and bismuth trioxide are the fluxes in this material and copper is added to improve wire bonding properties. Addition of copper standard solution to give a cell concentration of 1 ppm positively identified the more positive peak as being due to copper.

Strip B (Figure 4) gave several overlapping peaks of unknown source. Strip C (Figure 5) showed three peaks, the central one being coincident with the peak at approximately - 250 mV in strip A. This material also uses bismuth oxides as flux so it is likely that this peak was due to bismuth.

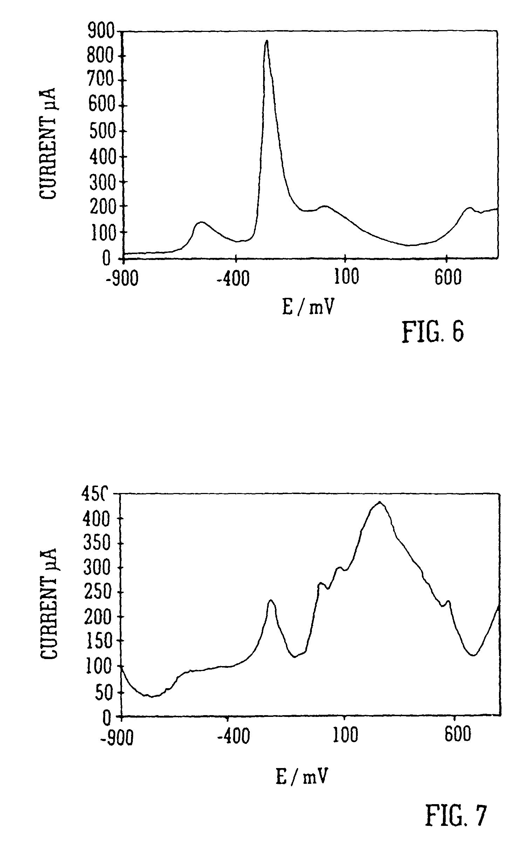

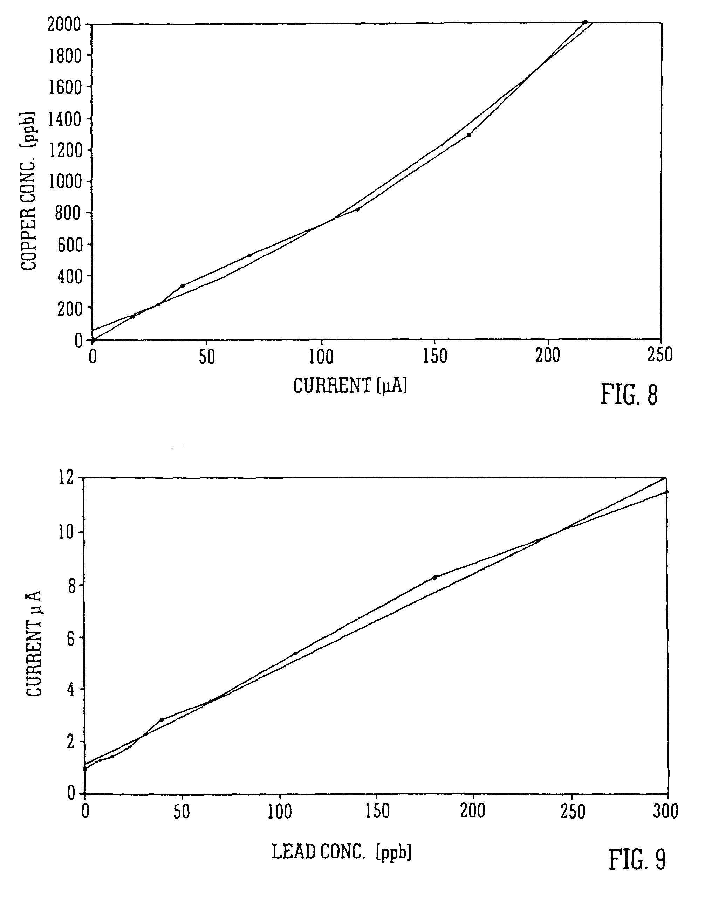

Strip D (Figure 6), another ink with a bismuth flux, also has a peak at - 250 mV, along with four others. However, there is a region between + 100 and + 500 mV which is relatively flat and which coincides with the location of the peak for copper. The plot of peak current <u>versus</u> concentration (Figure 8) is of sufficient slope and linearity to suggest that this material could be used to measure copper. Copper calibration identified the copper peak at +150 mV, but varying in the range +120 to +160 mV, depending on the concentration of copper in the analyte. However, the coefficients of variance range from 8 % to 25 %, which is unacceptably high for a commercial product.

Strip E contained no frit or flux and EDS showed only gold. The voltammogram (Figure 7) showed several overlapping peaks from - 100 mV to + 650 mV and one at - 225 mV. When the results for all of the strips are compared, it can be seen that most potentials are free of interferent in one ink or another. There is only the region between - 200 and - 300 mV which is always masked, either by bismuth or the alternative matrix in Heraeus C 5020 (strip E). This means that the gold particles used in the inks are not responsible for the interfering peaks and that it should be possible to make measurements over the full potential range if a non-electroactive screen-printing matrix can be found.

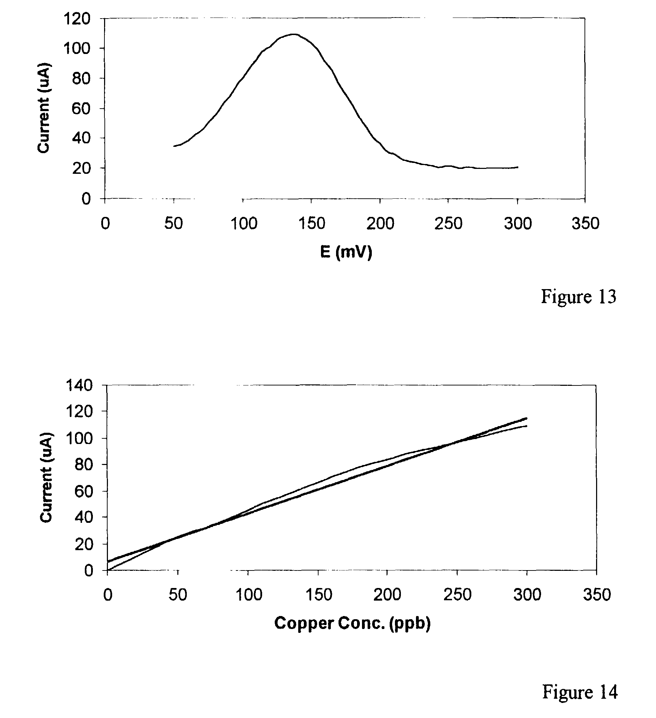

Initially, it was hoped that one ink would be found to be suitable for measurement of both copper and lead, the initial target analytes. Analysis of the response of the high temperature ink (Heraeus 5007) to analytes, copper and lead, indicated that the ink was unsuitable for analysis of lead and showed variation in response to the copper with changing electrodes. However, two options have been identified which significantly reduce this variation. By modifying the stripping regime to preconcentrate the copper ions at potentials above the stripping potential of the bismuth peak, it is possible to observe a copper response which has a reduced baseline component and a coefficient of variance of 5-10%. The measured response to such a modified regime is shown in Figure 13. A calibration curve for copper in the range 50ppb to 300ppb is shown for this method in Figure 14. Alternatively, by using an inherent feature of the inks such as the presence of Bismuth, as a scaling feature for dissimilar electrodes these electrode to electrode variations are overcome.

**(2) The scaling of an analyte response to that of another component of the ink.**

As mentioned above, the response to copper of electrodes prepared from Heraeus 5007 inks showed unacceptable variation from electrode to electrode. The analytical signal from the differential pulse stripping voltammetry measurement is a current peak which is directly related to the concentration of analyte in the solution under test. One of the principle problems associated with using this technique for quantitative measurements is the high variance in the measured current peak at a fixed analyte concentration. The exact mechanisms for this variation are not precisely known but involve differences in electrode surface area and electrode electrochemical activities. One method of reducing the variance in recorded results is to record the electrode response to an analyte of known concentration, whose detection does not prevent the detection of the target analyte. This recorded result can be used as a relative indicator of the sensitivity of the electrode and can be used to normalise the recorded peaks for analytes of unknown concentration. The process is dependent on establishing a correlation between a measured response to the analyte of fixed concentration and the response to the target analyte. Having established a correlation, the detection software can compensate for changes in electrode response for the target analyte due to variations in the electrodes only and not due to any changes in solution concentrations of the target analyte.

Typically, the analyte of fixed concentration is added to the solution under investigation before the measurement is made. The invention provides for the use of the peak from an electroactive species within the electrode itself. This normalisation process is employed using the electrodes based on the Heraeus 5007 gold ink for copper detection. This ink includes 4.5% bismuth and when running a stripping voltammetry measurement the bismuth is stripped in the range -240 to -250mV, specifically at around -245mV, with respect to a Ag/ AgCl reference electrode. The recorded response shows a strong correlation with the measured copper peak (at +150mV). In analysing the recorded current-voltage curve at fixed concentrations of copper, it is possible to scale all measured values to a standard value using the recorded bismuth peak. This recording of the bismuth peak can be done in a variety of methods including for example, measurement of absolute peak height, relative peak height to base line or area under peak. The formula for normalisation is :

$$\text{Normalised Response} = \text{Measured Response} * (\text{Standard Bi Response}) /$$

$$(\text{Measured Bi Response})$$

This procedure caused the 25% c.v. (coefficient of variance) to be reduced to 7% and the 8% c.v. to be reduced to 4 %. Using an electrode strip manufactured from such a high temperature ink with various stripping regimes, copper measurement has been demonstrated at concentrations from 0 to 10 ppm A calibration plot for copper, in the concentration range 0 to 2 ppm, prepared using this scaling method, is given in Figure 8.

In a second embodiment of the invention, used to investigate the presence of lead in a sample, the electrode strip is made from a polymeric ink.

## Polymeric inks

As previously described the use of polymeric inks within the microelectronic industry is known. The invention uses these known inks for the preparation of electrodes for the measurement of metal ions in solution. These inks use a polymeric matrix, e.g. polyesters, to bind particulate gold to the substrate. In this case, unlike that described with relation to the high temperature inks, the results obtained from electrodes of the same batch are of sufficiently low variance that scaling is not required. Inks that are commercially available are manufactured by, amongst others, DuPont, Heraeus and Ercon.

The process of manufacture of the electrode strips for use in the measurement of lead differs from that utilised in the manufacture of the high temperature ink based electrode strips. The following procedure is used;

1. The ceramic substrate is scribed into an 'electrode' cell pattern in the same manner as outlined above with relation to the high temperature frit inks(i.e. 21 electrodes per plate)

2. One strip of silver-silver chloride ink is then screen printed and dried onto each electrode strip of the substrate to form the reference electrode.

3. Two strips of gold polymeric ink are subsequently screen printed onto each electrode cell of the substrate to form the working electrode and the counter electrode.

4. The gold material is then dried onto the substrates in a forced convection oven.

5. An encapsulant layer is screen printed onto the electrode cell, so that only the edge connectors and defined electrode areas of the three electrode strips, i.e. counter, working, and reference, remain uncovered

6. The encapsulant is dried in a forced convection oven

After singulation of 21 electrodes from the parent plate, an electrode strip is then connected to an instrument.

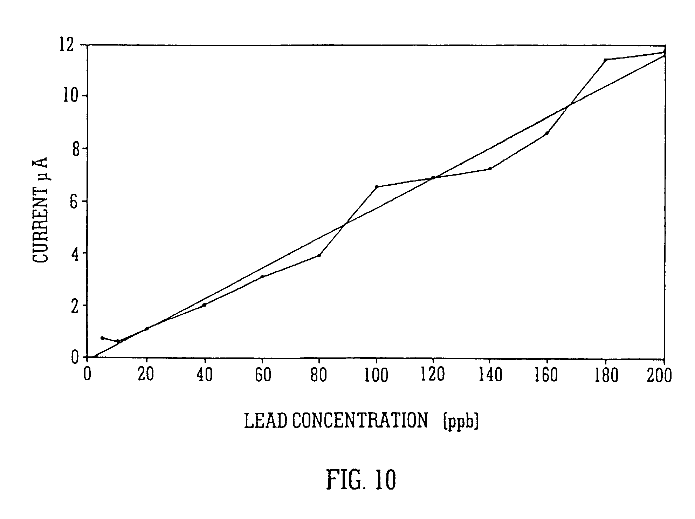

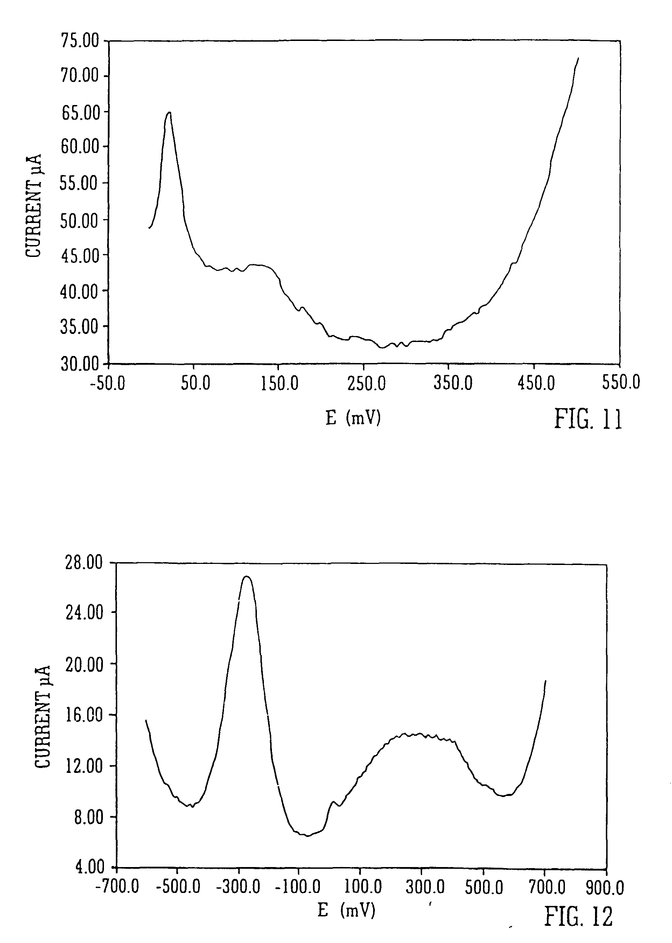

Calibration plots for lead measurement using strips prepared from two different polymeric inks are shown in figures 9 and 10. The apparatus hereinbefore described uses lead and copper as examples of metals that can be identified using screen printed non-mercury based electrodes. Figures 11 and 12 are voltammograms for electrolytes containing silver and cadmium for these metals.

The present invention has been described with reference to a three electrode strip arrangement with working, reference and counter electrode functionality. In an alternative embodiment the reference and counter functionality may be provided by the same electrode. In this case the reference electrode also acts as counter electrode by completing the circuit between instrument, working electrode and solution. This would eventually cause polarisation of the reference electrode but the measurement time is short enough that the reference electrode still maintains its potential.

Although described with reference to electrodes manufactured from high temperature and polymeric gold inks, in an analogous manner the electrodes may be manufactured from one or more of the following metal inks: nickel, silver, palladium, platinum and copper. Examples of suppliers and product numbers which may be used are listed below.

| Supplier | Ink |
|---|---|
| Heraeus Incorporated, PA, USA | silver palladium C1214, C 1214 LS, C 4140 LS<br>platinum<br>nickel<br>gold palladium conductor<br>gold platinum conductor C6310 S<br>gold conductors C5789, C5007<br>silver conductor<br>silver platinum C4740M |

(continued)

| Supplier | Ink |
|---|---|
| | copper<br>platinum palladium silver |
| DuPont Electronic Materials, NC, USA | palladium silver 5081, 5082<br>gold 5062, 5063<br>silver<br>platinum silver |
| ERCON | polymer thick film conductive silver coating<br>ERCON E-1400 (3/4-73)<br>gold R-464 (DPM-78)<br>electrode sensor coating material ERCON R-478 (DBE-80) platinum<br>electrode sensor coating material ERCON R-464 (DPM-78) gold |

All voltages hereinbefore described are with reference to a silver/silver chloride reference electrode in solutions with a chloride ion concentration of 100 milli Molar (mM). If the reference material is changed these values will change correspondingly.

**Advantages**

The electrodes of the present invention have three main advantages over prior art electrodes - they are mercury-free, they allow a two-step rather than three-step analysis of trace metals and the results are reliable and reproducible. Since they are cheap to manufacture and contain no substances harmful to the environment they are fully disposable. Alternatively, the metal components of the electrodes could be recycled

**Claims**

1. An electrode strip, for the direct analysis of electroactive species comprising a working electrode formed from a non-mercury-based metal ink, screen-printed onto a support.

2. The electrode strip as claimed in claim 1 further comprising a reference electrode and optionally further comprising a counter or auxiliary electrode.

3. The electrode strip as claimed in claim 2 wherein the counter or auxiliary electrode is screen-printed with a non-mercury-based metal ink.

4. The electrode strip as claimed in claim 2 or claim 3 wherein the reference electrode is a silver/silver chloride electrode.

5. The electrode strip as claimed in any preceding claim, wherein the support is an inert, nonconductive, physically robust material such as plastic or ceramic.

6. The electrode strip as claimed in any preceding claim, wherein the metal ink is selected from an ink comprising one or more of the following metals; gold, silver, palladium, platinum, copper, nickel, or alloys thereof.

7. The electrode strip as claimed in any preceding claim wherein the working electrode has no overlying layer.

8. The electrode strip as claimed in any preceding claim wherein the metal ink further comprises one or more of the following:

a) a frit to form physical bulk and to bind the metal to the surface;

b) a solvent to improve the flow properties of the ink and to ensure that the ink is screen-printable and fireable; and

c) a flux, suitably a bismuth oxide or copper oxide flux, which acts to promote binding and to improve flow properties.

9. The electrode strip as claimed in any one of claims 1 to 7 wherein the metal ink is a polymeric ink which comprises a polymeric binder to hold the metal together and onto the substrate, and a solvent to make the ink screen-printable and fireable.

10. The electrode strip as claimed in any preceding claim wherein the ink further comprises copper metal to assist in wire bonding.

11. An electrode cell comprising at least one electrode strip as defined in any one of claims 1 to 10.

12. An electrode cell as claimed in claim 11 wherein one or more electrodes are printed on a single electrode strip, and preferably wherein the working electrode, a reference electrode and a counter electrode are all are printed on the same strip

13. Use of an electrode strip as claimed in any one of claims 1 to 10 or an electrode cell as claimed in any of claims 11 to 12, for the direct measurement of electroactive species in liquids.

14. Use as claimed in claim 13 wherein the electroactive species is selected from one or more of lead, copper, silver, magnesium, cadmium, zinc, mercury and bismuth.

15. A method of stripping voltammetry comprising the steps of:

a) connecting an electrode cell comprising an electrode strip which in turn comprises a non-mercury based metal ink, screen printed onto a support, to an instrument capable of the application of controlled waveforms and the measurement of the response to the applied waveform, the electrode cell comprising a working electrode, a reference electrode and optionally a counter electrode,

b) adding an analyte to the electrode cell,

c) applying a controlled waveform to the analyte/electrolyte mix and

d) measuring the analyte response to this waveform.

16. The method as claimed in claim 15 comprising the further step of adding an electrolyte to improve the conductivity and control the pH of the analyte.

17. The method as claimed in claim 15 or claim 16 wherein the non-mercury based metal ink is selected an ink comprising one or more of the following metals: gold, silver, palladium, platinum, copper, nickel or alloys thereof.

18. The method as claimed in any one of claims 15 to 17 further comprising the step of scaling the analyte response to an integral component of the working electrode.

19. The method as claimed in any of claims 15 to 17 wherein the analyte is tested for traces of one or more of metals selected from copper or lead.

20. The method as claimed in claim 18 wherein the integral component of the working electrode is bismuth.

21. An apparatus for the direct determination of electroactive species in liquids comprising:

a) at least one electrode strip as claimed in any of claims 1 to 10,

b) a volume definition;

c) electrolyte components;

d) an instrument capable of application of controlled waveforms and the measurement of the response to this applied waveform;

e) a visual read-out

**22.** The apparatus for the determination of electroactive species in liquids as claimed in claim 21 further comprising a means for implementing a data conversion algorithm wherein said data conversion algorithm may be used to convert the differential response of the instrument to an estimation of the electroactive species concentration within the liquid.

FIG. 1

FIG. 2

FIG. 3

FIG. 4

FIG. 5

FIG. 6

FIG. 7

FIG. 8

FIG. 9

FIG. 10

FIG. 11

FIG. 12

Figure 13

Figure 14